# EUROPÄISCHE PATENTSCHRIFT

(11) **EP 0 945 314 B1**
(45) Veröffentlichungstag und Bekanntmachung des Hinweises auf die Patenterteilung: **28.07.2004**
(21) Anmeldenummer: 99105038.6
(22) Anmeldetag: 22.03.1999
(51) Int. Cl.: B60R 21/28

(54) **Aufprall-Schutzvorrichtung für Fahrzeuginsassen**
Crash protection device for vehicle occupants
Dispositif de protection en cas d'accident pour les occupants d' un véhicule

(30) Priorität: 23.03.1998 DE 29805209 U
(43) Veröffentlichungstag der Anmeldung: 29.09.1999
(73) Patentinhaber: TRW Automotive Safety Systems GmbH, 63743 Aschaffenburg (DE)
(72) Erfinder: Weikl, Harald, 63739 Aschaffenburg (DE)
(74) Vertreter: Degwert, Hartmut, Dipl.-Phys.

(56) Entgegenhaltungen:
- EP-A- 0 800 967
- DE-A- 19 754 280
- GB-A- 2 306 409
- US-A- 5 366 242
- US-A- 5 707 078
- US-A- 5 743 558

## Beschreibung

Die Erfindung betrifft eine Aufprall-Schutzvorrichtung für einen Fahrzeuginsassen, bestehend im wesentlichen aus einem Airbag mit Gasgenerator und Zündeinrichtung.

Derartige Schutzvorrichtungen werden bei allen modernen Großserien-Personenkraftwagen vorgesehen und kurz mit Airbag bezeichnet. Sie umfassen einen zusammengefalteten Gassack, den Airbag im engeren Sinne, einen Gasgenerator und eine Zündeinrichtung, die elektronisch gezündet wird, sobald an einem Verzögerungssensor das Überschreiten eines bestimmten, einstellbaren Grenzwertes festgestellt wird. Der zusammengefaltete Gassack ist im Lenkrad, der Armaturentafel, im Fahrzeugsitz oder an anderen, geeigneten Stellen im Inneren der Fahrzeugkarosserie verdeckt angeordnet, wobei die Abdeckung aufgerissen und meist scharnierartig aufgeklappt wird, wenn der Gassack infolge einer Aktivierung des Gasgenerators explosionsartig mit Gas gefüllt wird.

Der Gassack soll bei einem Unfall nach Möglichkeit bereits vollständig aufgeblasen sein, bevor der zu schützende Fahrzeuginsasse auf den Gassack aufprallt. Anschließend soll der Fahrzeuginasse in seiner Vorwärtsbewegung möglichst verletzungsfrei abgebremst und nicht in die Gegenrichtung zurückgeworfen werden. Zu diesem Zweck muß die Schutzvorrichtung, die aus einer mehr oder weniger elastischen Umhüllung und einer komprimierbaren Gasfüllung besteht, ein möglichst plastisches Aufprallverhalten aufweisen, d. h. der Aufprallimpuls soll nicht in elastische Speicherenergie umgewandelt, sondern nach Möglichkeit so umgewandelt werden, daß keine Rückprallkräfte auf den in den Gassack einfallenden Fahreuginsassen wirken.

Ein derartiges Verhalten der Airbags wird seit deren Einführung dadurch erreicht, daß das Hüllmaterial des Gassacks vollflächig mehr oder weniger gasdurchlässig ist und/oder daß am Gassack ein oder mehrere Gasauslaßöffnungen mit definiertem Querschnitt vorgesehen sind. In allen Fällen ist der gesamte Gasauslaßquerschnitt so eingerichtet, daß bei einer Aktivierung des Gasgenerators der Gassack zunächst auf einen vorgegebenen Druck voll aufgeblasen werden kann und daß anschließend das Gas aus dem Gassack mit einer durch den gesamten Gasauslaßquerschnitt bestimmten Rate aus dem Gassack abfließen kann.

GB-A-2 306 409 offenbart eine gattungsgemäße Gassackschutzvorrichtung mit Gasauslaßöffnungen am Airbag, die bis zur Aktivierung des Airbags vollständig geschlossen sind. Die Gasauslaßöffnungen werden erst auf ein Signal hin über einen Steuerschieber geöffnet. Die Größe der Gasauslaßöffnung ist dabei fest vorgegeben.

In US-A-5 366 242 wird eine Möglichkeit beschrieben, den Gaszufluß bei der Aktivierung des Gassacks so zu steuern, daß im Gassack unabhängig von der herrschenden Temperatur immer der gleiche Druck erreicht wird. Hierzu wird eine Auslaßöffnung am Airbagmodulgehäuse temperaturabhängig mehr oder weniger bedeckt.

EP-A-0 800 967 behandelt ebenfalls den kontrollierten Gaszufluß bei der Aktivierung des Gassacks. Auslaßöffnungen am Airbagmodulgehäuse können abhängig von verschiedenen Parametern wie Schwere des Aufpralls, Größe und Position des Fahrzeuginsassen, angeschnallt oder nicht, mehr oder weniger geöffnet werden, um den Gassack entsprechend der Anforderungen aufzublasen.

Das Gesamtvolumen des Gassacks und die Gasabflußrate können konstruktiv auf jeden vorgegebenen Anwendungszweck abgestimmt werden. Die in Lenkrädern integrierten Airbags können ein geringeres Volumen aufweisen, weil man davon ausgehen kann, daß der Fahrer eines Fahrzeugs stets eine enger definierbare Position gegenüber dem Airbag einnimmt, als der Beifahrer, für den daher im allgemeinen stets größer dimensionierte Gassäcke vorgesehen werden.

Ein hinsichtlich seines Volumens und seines Gasauslaßverhaltens konstruktiv festgelegter Airbag kann jedoch nicht zugleich optimal für einen Fahrzeuginsassen von einerseits 50 kg und andererseits 100 kg ausgelegt werden. Für die größere einfallende Körpermasse müssen stärkere "Bremskräfte" aktiviert werden, als für die kleinere Körpermasse. Um die Airbags insoweit auf den individuellen Anwendungsfall besser abstimmen zu können, sind bereits Gasauslaßöffnungen vorgeschlagen worden, deren Querschnitt sich in Abhängigkeit von der einfallenden Körpermasse bzw. dem dadurch verursachten Druckanstieg im Gassack derart selbsttätig verändert, daß die Gasabflußrate umgekehrt proportional zur einfallenden Körpermasse ist. Auf diese Weise kann erreicht werden, daß die vom Gassack auf den einfallenden Körper wirkenden Abbremskräfte besser auf die Masse des betroffenen Körpers abgestimmt sind.

Bei diesen bekannten Systemen wird noch bemängelt, daß lediglich eine einfache, umgekehrte Proportionalität von Gasauslaßquerschnitt und einfallender Körpermasse realisiert werden kann und daß insbesondere die Veränderung des Gasauslaßquerschnitts davon abhängig ist, daß die maßgebliche "Stellgröße" erst beim Aufprall des Körpers auf den Gassack und damit möglicherweise zu spät erzeugt werden kann.

Es besteht somit die Aufgabe, das Gasauslaßverhalten eines Airbags besser und unabhängiger von erst bei einer Aktivierung des Airbags erfaßbaren Parametern an den jeweiligen Fahrzeugbenutzer anpassen zu können.

Zur Lösung dieser Aufgabe wird erfindungsgemäß vorgeschlagen, daß am Airbag wenigstens eine Gasauslaßöffnung ausgebildet ist und daß Mittel vorgesehen sind, durch die der maximale Auslaßquerschnitt der Gasauslaßöffnung in Abhängigkeit von einem oder mehreren Parametern aktiv auf einen Wert entsprechend den jeweiligen Bedürfnissen eingestellt werden kann. Es soll also eine Gasauslaßöffnung realisiert werden, bei der der Strömungsquerschnitt und damit die maximal mögliche Gasauslaßrate auf einen vorgebbaren Wert begrenzt werden kann. Anders als bei den bisherigen Maßnahmen zur Beeinflussung des Gasauslaßquerschnitts soll dieser nicht erst während des Eintauchens verändert, sondern bereits vor einer Aktivierung des Gassacks auf den jeweiligen Benutzer optimal einstellbar sein. Dem liegt die Erwägung zugrunde, am Gassack eine Gasauslaßöffnung vorzusehen, die auf die maximal erforderliche Gasauslaßrate abgestimmt ist. Das wäre die kleinste konstruktiv zu berücksichtigende Körpermasse, für die die Schutzvorrichtung ausgelegt werden soll. Sieht man bei dieser für den Anwendungsfall größten, erforderlichen Gasauslaßöffnung eine Möglichkeit vor, sie in Abhängigkeit beispielsweise von Parametern des Fahrzeugbenutzers in irgendeiner Weise zu verringern, hat man bereits eine Möglichkeit gewonnen, die Gasabflußrate aus dem Gassack so zu gestalten, daß sie im Rahmen der sonstigen konstruktiven Randbedingungen optimal auf den Benutzer abgestimmt ist. Eine derartig gestaltete Gasauslaßöffnung hat den weiteren Vorteil, daß die Mittel zur Begrenzung des Auslaßquerschnitts auch in Abhängigkeit von anderen Parametern steuerbar sind, beispielsweise in Abhängigkeit von der Fahrzeuggeschwindigkeit oder von der Umgebungstemperatur, einer für das "pneumatische System" entscheidenden Einflußgröße.

Vorteilhafte Ausgestaltungen des Erfindungsgedankens sind in den Unteransprüchen 2 bis 17 beschrieben. Weitere Einzelheiten werden anhand des in Fig. 1 dargestellten Diagramms sowie an der in den Figuren 2 bis 5 dargestellten Ausführungsbeispiele näher erläutert. Es zeigen:
Fig. 1 die zeitliche Änderung des Druckverlaufs und des Auslaßquerschnitts bei der Aktivierung eines Airbags;
Fig. 2 schematisch ein erstes Ausführungsbeispiel des Erfindungsgedankens;
Fig. 3 ein zweites Ausführungsbeispiel des Erfindungsgedankens;
Fig. 4 ein drittes Ausführungsbeispiel des Erfindungsgedankens;
Fig. 5 ein viertes Ausführungsbeispiel des Erfindungsgedankens.

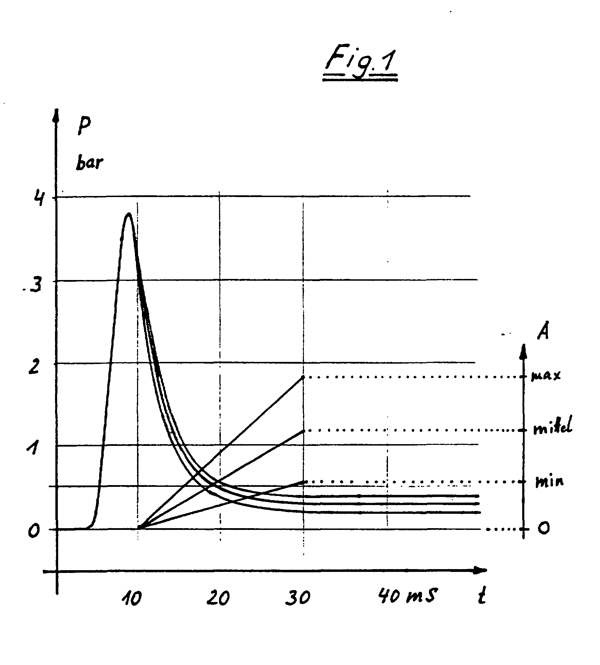

Ausgehend von einem gemessenen Druckverlauf bei der Aktivierung eines Airbags sind in Fig. 1 schematisch drei mögliche Druckverläufe dargestellt, wie sie sich bei Verwendung eines aktiv betätigten Gasauslaßquerschnitts ergeben können. Etwa 5 ms nach Zündung des Gasgenerators steigt der Druck im Airbag von 0 auf etwa 3,75 bar steil an, bis die äußere Airbagabdeckung abgelöst wird und der Airbag sich entfalten kann. Infolge der Volumenvergrößerung sinkt der Druck im Airbag danach fast ebenso steil ab wie in der Druckaufbauphase, um dann ab etwa 12 bis 15 ms nach der Zündung flacher und asymptotisch in einen Endwert einzulaufen, der unterhalb von 0,5 bar liegt. Es sind drei Druckabfallkurven dargestellt, die den drei unterschiedlichen größten erreichbaren Gasauslaßöffnungen zuzuordnen sind. Die Öffnung des Gasauslasses am Airbag beginnt gemäß Fig. 1 etwa 10 ms nach Zündung des Gasgenerators und erreicht den größten Querschnitt nach etwa 30 ms, d. h. etwa zeitgleich mit dem Einfallen eines Insassen in den Airbag. Dargestellt ist ein linearer Öffnungsverlauf von 0 auf einen Auslaßquerschnitt A, für den drei konkrete Werte, nämlich min., mittel und max. angegeben sind. Dem größen Auslaßquerschnitt bzw. der größten zeitlichen Änderung des Auslaßquerschnitts ist die Kurve mit dem größten Druckabfall zuzuordnen. Im dargestellten Diagramm wird dabei zum Einfallzeitpunkt nach 30 ms ein Restdruck von etwa 0,2 bar erreicht. Dem kleinsten erreichbaren Gasauslaßquerschnitt ist die oberste Druckabfallkurve zuzuordnen, bei der zum Einfallzeitpunkt im dargestellten Beispiel noch ein Restdruck von etwa 0,4 bar herrscht. Dementsprechend gehört zum mittleren, maximal erreichbaren Auslaßquerschnitt die mittlere Druckabfallkurve mit einem Restdruckwert von etwa 0,3 bar.

Es versteht sich von selbst, daß alle vorgenannten Zahlenwerte nur als Beispiel aufzufassen sind und nur der Erläuterung des Erfindungsgedankens dienen, ohne ihn gleichzeitig auf die genannten Werte einzuschränken.

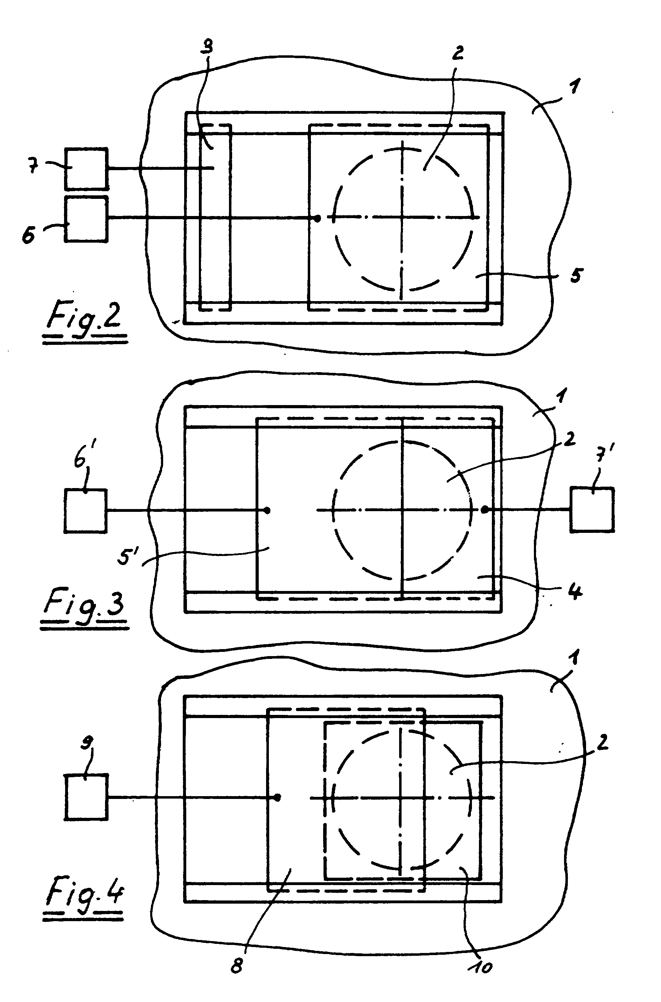

Die Figuren 2 bis 4 zeigen rein schematisch mögliche Ausführungsformen des Erfindungsgedankens. Bei der Version gemäß Fig. 2 ist im Airbag 1 eine Gasauslaßöffnung 2 vorgesehen, die im Ruhezustand vollständig von einem Schieber 5 überdeckt ist. Der Schieber 5 kann mittels eines Stellantriebes 6 nach links verfahren werden, wenn die Gasauslaßöffnung 2 freigegeben werden soll. Dabei wird die Freigabe der Gasauslaßöffnung 2 bzw. die Bewegung des Schiebers 5 durch einen Anschlag 3 begrenzt, der erfindungsgemäß mittels eines zweiten Stellantriebes 7 verstellbar ist. Auf diese Weise kann der maximale Querschnitt der Gasauslaßöffnung in Abhängigkeit zweckmäßig auszuwählender Parameter auf die jeweiligen Bedürfnisse eingestellt werden.

Bei der Ausführungsform gemäß Fig. 3 ist statt eines Anschlags ein Deckel 4 vorgesehen, der über einen Stellantrieb 7' verstellbar ist und zusammen mit dem Schieber 5' die Gasauslaßöffnung 2 im Airbag 1 vollständig überdeckt. Im dargestellten Beispiel wird die Gasauslaßöffnung 2 etwa je zur Hälfte vom Deckel 4 und vom Schieber 5' überdeckt. Der Stellantrieb 7' ist wie der Stellantrieb 7 für den Anschlag 3 in Abhängigkeit eines oder mehrerer zweckmäßig auszuwählender Parameter anzusteuern und so ausgelegt, daß er den Schieber 5' in die gewünschte Ausgangsposition bringen kann. Bei einer Änderung der Stellgröße für den Stellantrieb 7' in Richtung kleinerer Überdeckung des Gasauslaßquerschnitts 2 muß dafür gesorgt werden, daß der Schieber 5' entweder von dem zugehörigen Stellantrieb oder einem gesonderten, elastischen Rückstellelement bis gegen den Deckel 4 nachgeführt wird.

Bei der Ausführungsform gemäß Fig. 4 ist die Gasauslaßöffnung 2 im Airbag 1 durch eine Folie 10 komplett verschlossen. Der Schieber 8 mit seinem Stellantrieb 9 entspricht hier funktionsmäßig dem Deckel 4 mit Stellantrieb 7' gemäß Fig. 3. Dabei kann der Stellantrieb in Abhängigkeit von einem Parameter so angesteuert werden, daß der Schieber 8 die Gasauslaßöffnung so weit überdeckt, daß nach einem Aufreißen der Folie 10 infolge des Innendrucks im Airbag 1 nur der maximal gewünschte Auslaßquerschnitt freigegeben wird.

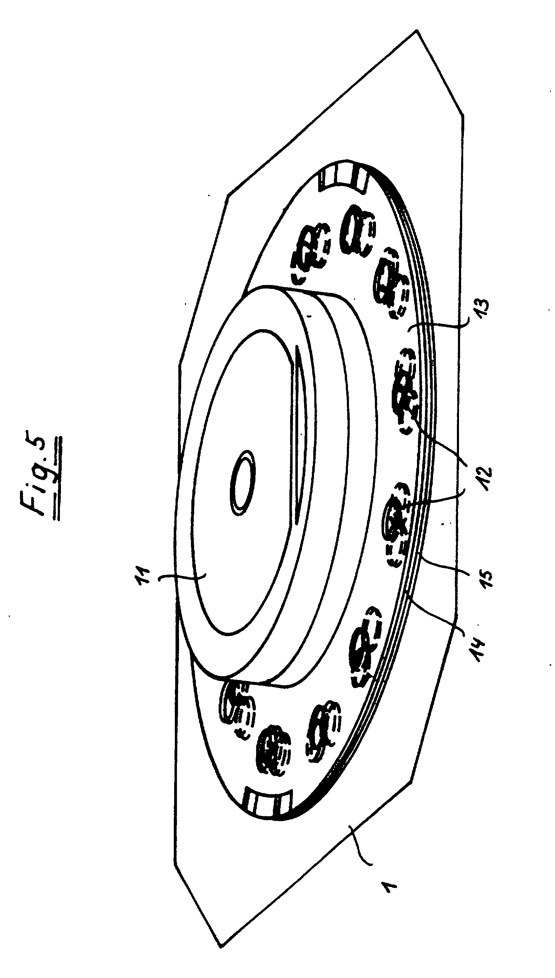

Fig. 5 zeigt schematisch, wie der Erfindungsgedanke bei einer Aufprall-Schutzvorrichtung realisiert werden kann, bei der ein gebräuchlicher Gasgenerator 11 mit kreiszylindrischem Gehäuse verwendet wird. Derartige Gehäuse weisen meist einen radial vorstehenden Flansch auf, an dem der Airbag befestigt ist. Wird dieser an sich vorhandene Flansch zu einem Ring 13 ausgeweitet, so können in diesem Ring eine oder mehrere Gasauslaßöffnungen 12 untergebracht werden. Im dargestellten Beispiel sind am Umfang gleichmäßig verteilt mehrere Gasauslaßöffnungen vorgesehen. Dem Ring 13 ist ein antreibbarer, ringförmiger Schieber 14 zugeordnet, in dem eine gleiche Anzahl kreisförmiger Gasdurchlässe ausgebildet ist. Ferner ist noch ein antreibbarer, ringförmiger Deckel oder Anschlag 15 vorgesehen, der ebenfalls kreisförmige Gasdurchlässe aufweist, die korrespondierend zu den Gasauslaßöffnungen 12 im Ring 13 bzw. den Gasdurchlässen im ringförmigen Schieber 14 angeordnet sind. Durch Drehen des ringförmigen Deckels bzw. Anschlags 15 können die kreisförmigen Gasdurchlässe mit den Gasauslaßöffnungen 12 ganz oder teilweise zur Deckung gebracht werden, wodurch der maximal mögliche Gasauslaßquerschnitt festgelegt werden kann. Der antreibbare ringförmige Schieber ist in seiner Ausgangslage derartig gedreht, daß seine Gasdurchlässe nicht mit den Gasauslaßöffnungen 12 im Ring 13 zusammenfallen. Bei einer Aktivierung des Airbags 1 wird dann der ringförmige Schieber 14 aus seiner Schließstellung in die Öffnungsstellung gedreht, in der seine kreisförmigen Gasdurchlässe genau korrespondierend zu den kreisförmigen Gasauslaßöffnungen 12 im Ring 13 liegen. Auf diese Weise wird der durch den ringförmigen Deckel bzw. Anschlag 15 voreingestellte, maximale Gasauslaßquerschnitt freigegebcn.

Maßgebend für alle dargestellten Ausführungsbeispiele des Erfindungsgedankens ist, daß ein Gasauslaßquerschnitt gegebener Größe in Abhängigkeit von einem oder mehreren Parametern aktiv auf einen Querschnitt einstellbar ist, der den jeweiligen Bedürfnissen am besten entspricht. Insbesondere soll durch den maximal zur Verfügung gestellten Gasauslaßquerschnitt dafür gesorgt werden, daß der Restdruck im Airbag zum Zeitpunkt des Einfallens eines Insassen optimal an das einfallende Körpergewicht angepaßt ist. Außerdem ist es selbstverständlich möglich, andere Parameter für die Einstellung des maximalen Gasauslaßquerschnitts und die Aktivierung der Gasauslaßöffnung zu berücksichtigen, beispielsweise die Fahrzeuggeschwindigkeit, die Größe der Fahrzeugverzögerung oder die Ausfahrlänge eines Rückhaltegurtes.

## Patentansprüche

1. Aufprall-Schutzvorrichtung für einen Fahrzeuginsassen, mit einem Airbag, einem Gasgenerator und einer Zündeinrichtung, wobei am Airbag (1) wenigstens eine Gasauslaßöffnung (2) ausgebildet ist und wobei Mittel (5, 6; 4, 5', 6'; 10; 14) vorgesehen sind, um nach Aktivierung des Airbags einen maximalen Auslaßquerschnitt der Gasauslaßöffnung (2) freizugeben, **dadurch gekennzeichnet, daß** zusätzliche Mittel (3, 7; 4, 7; 8, 9; 15) vorgesehen sind, durch die der maximale Auslaßquerschnitt der Gasauslaßöffnung in Abhängigkeit von einem oder mehreren Parametern aktiv auf einen bestimmten Maximalwert einstellbar ist.

2. Schutzvorrichtung nach Anspruch 1, **dadurch gekennzeichnet, daß** die Gasauslaßöffnung (2) vollständig geschlossen ist und daß sie sich nach der Aktivierung des Airbags auf den eingestellten, maximalen Querschnitt selbsttätig öffnet.

3. Schutzvorrichtung nach Anspruch 2, **dadurch gekennzeichnet, daß** die Gasauslaßöffnung (2) mittels eines Schiebers (5) oder dergl. vollständig geschlossen ist, der nach Aktivierung des Airbags mittels eines Stellantriebes (6) in seine Öffnungsstellung mit maximalem Querschnitt verfahrbar ist.

4. Schutzvorrichtung nach Anspruch 3, **dadurch gekennzeichnet, daß** der Schieber (5) vom Stellantrieb (6) bis zu einem Anschlag (3) in Öffnungsrichtung verfahrbar ist, wobei der Anschlag (3) seinerseits mittels eines zweiten Stellantriebes (7) einstellbar ist.

5. Schutzvorrichtung nach Anspruch 2, **dadurch gekennzeichnet, daß** der Querschnitt der Gasauslaßöffnung (2) teils von einem einstellbaren Deckel (4) und teils von einem Schieber (5'), insgesamt aber vollständig geschlossen ist, wobei der vom Anschlag (3) abgedeckte Querschnittsteil mittels eines zweiten Stellantriebes (7') einstellbar ist und nach der Aktivierung des Airbags verschlossen bleibt, während der vom Schieber (5') abgedeckte Querschnittsteil nach der Aktivierung des Airbags durch Verfahren des Schiebers (5') mittels eines ersten Stellantriebes (6') freigebbar ist.

6. Schutzvorrichtung nach Anspruch 2, **dadurch gekennzeichnet, daß** die Gasauslaßöffnung (2) mittels einer vom Gasdruck im Airbag aufreißbaren Folie (10) vollständig geschlossen ist und daß zur Einstellung des maximalen Querschnitts außerdem ein Schieber (8) oder dergl. vorgesehen ist, der mittels eines Stellantriebes (9) einstellbar ist.

7. Schutzvorrichtung nach einem der Ansprüche 1 bis 6, **dadurch gekennzeichnet, daß** der Maximalwert des Querschnitts der Gasauslaßöffnung (2) in Abhängigkeit vom Gewicht des Fahrzeuginsassen einstellbar ist.

8. Schutzvorrichtung nach Anspruch 7, **dadurch gekennzeichnet, daß** der Maximalwert des Querschnitts der Gasauslaßöffnung (2) außerdem in Abhängigkeit von der Fahrzeuggeschwindigkeit einstellbar ist.

9. Schutzvorrichtung nach Anspruch 7 oder 8, **dadurch gekennzeichnet, daß** der Maximalwert des Querschnitts der Gasauslaßöffnung (2) zusätzlich noch in Abhängigkeit von der unfallbedingten Fahrzeugverzögerung oder anderer Zustandsgrößen einstellbar ist.

10. Schutzvorrichtung nach einem der Ansprüche 7 bis 9, **dadurch gekennzeichnet, daß** ein elektromotorischer Stellantrieb vorgesehen ist.

11. Schutzvorrichtung nach einem der Ansprüche 1 bis 5, **dadurch gekennzeichnet, daß** die Geschwindigkeit der Querschnittsfreigabe in Abhängigkeit von wenigstens einem der Parameter der Ansprüche 7 bis 9 einstellbar ist.

12. Schutzvorrichtung nach Anspruch 11, **dadurch gekennzeichnet, daß** ein Stellantrieb mit mechanischer, pneumatischer oder pyrotechnischer Speicherenergie vorgesehen ist.

13. Schutzvorrichtung nach einem der Ansprüche 1 bis 12, **dadurch gekennzeichnet, daß** die Querschnittsänderung während des Freigabevorgangs durch die Kontur der Gasauslaßöffnung und/oder durch die Kontur des Schiebers oder dergl. beeinflußbar ist.

14. Schutzvorrichtung nach Anspruch 13, **dadurch gekennzeichnet, daß** der Beginn des Freigabevorgangs einstellbar ist.

15. Schutzvorrichtung nach Anspruch 14, **dadurch gekennzeichnet, daß** die den maximalen Querschnitt der Gasauslaßöffnung bestimmenden Vorgänge ausgelöst werden, sobald die Kraftfahrzeugzündung eingeschaltet wird.

16. Schutzvorrichtung nach einem der Ansprüche 1 bis 15, **dadurch gekennzeichnet, daß** die Gasauslaßöffnung in mehrere Auslaßöffnungen unterteilt ist.

17. Schutzvorrichtung nach Anspruch 16, **dadurch gekennzeichnet, daß** die Gasauslaßöffnungen (12) in einem den Gasgenerator (11) umgebenden Ring (13) untergebracht sind und daß ein antreibbarer, ringförmiger Schieber (14) und ein antreibbarer, ringförmiger Deckel oder Anschlag (15) vorgesehen sind.

## Claims

1. An impact protection device for a vehicle occupant, comprising an air bag, an inflator and an ignition device, the air bag (1) having at least one gas outlet port (2), and means (5, 6; 4, 5', 6'; 10; 14) being provided for exposing a maximum outlet cross-section of the gas outlet port (2) after activation of the air bag, **characterized in that** additional means (3, 7; 4, 7; 8, 9; 15) are provided by which the maximum outlet cross-section of the gas outlet port is actively adjustable to a specific maximum value as a function of one or more parameters.

2. The protection device as set forth in claim 1, **characterized in that** the gas outlet port (2) is totally closed and that after activation of the air bag it automatically opens to the maximum cross-section as adjusted.

3. The protection device as set forth in claim 2, **characterized in that** the gas outlet port (2) is totally closed by means of a slide valve (5) or the like which after activation of the air bag is movable into its open position with maximum cross-section by means of an actuator (6).

4. The protection device as set forth in claim 3, **characterized in that** the slide valve (5) is movable by the actuator (6) up to a stop (3) in the opening direction, the stop (3) for its part being adjustable by means of a second actuator (7).

5. The protection device as set forth in claim 2, **characterized in that** the cross-section of the gas outlet port (2) is closed partly by an adjustable cover (4) and partly by a slide valve (5') but, as a whole, is totally closed, the cross-section portion covered by the stop (3) being adjustable by means of a second actuator (7') and remaining closed after activation of the air bag, whilst the cross-section portion covered-by the slide valve (5') is adapted to be exposed by moving the slide valve (5') by means of a first actuator (6') after activation of the air bag.

6. The protection device as set forth in claim 2, **characterized in that** the gas outlet port (2) is totally closed by means of a foil (10) adapted to be torn open by the gas pressure within the air bag and that for adjusting the maximum cross-section a slide valve (8) or the like is additionally provided which is adjustable by means of an actuator (9).

7. The protection device as set forth in any of claims 1 to 6, **characterized in that** the maximum value of the cross-section of the gas outlet port (2) is adjustable as a function of the weight of the vehicle occupant.

8. The protection device as set forth in claim 7, **characterized in that** the maximum value of the cross-section of the gas outlet port (2) is further adjustable as a function of the vehicle speed.

9. The protection device as set forth in claim 7 or 8, **characterized in that** the maximum value of the cross-section of the gas outlet port (2) is additionally adjustable as a function of the vehicle deceleration as caused by an accident or of other variable quantities.

10. The protection device as set forth in any of claims 7 to 9, **characterized in that** an electric motor driven actuator is provided.

11. The protection device as set forth in any of claims 1 to 5, **characterized in that** the cross-section is exposed at a rate adjustable as a function of at least one of the parameters of claims 7 to 9.

12. The protection device as set forth in claim 11, **characterized in that** an actuator is provided involving mechanical, pneumatic, or pyrotechnical stored energy.

13. The protection device as set forth in any of claims 1 to 12, **characterized in that** the change in cross-section can be influenced during the exposure process by the contour of the gas outlet port and/or by the contour of the slide valve or the like.

14. The protection device as set forth in claim 13, **characterized in that** the start of the exposure process is adjustable.

15. The protection device as set forth in claim 14, **characterized in that** the processes determining the maximum cross-section of the gas outlet port are triggered as soon as the motor vehicle ignition is turned on.

16. The protection device as set forth in any of claims 1 to 15, **characterized in that** the gas outlet port is subdivided into a plurality of outlet ports.

17. The protection device as set forth in claim 16, **characterized in that** the gas outlet ports (12) are accommodated in a ring (13) surrounding the inflator (11) and that a driveable, annular slide valve (14) and a driveable, annular cover or stop (15) are provided.

## Revendications

1. Dispositif de protection contre les chocs pour un occupant de véhicule, comportant un airbag, un générateur de gaz et un dispositif d'allumage, au moins un orifice de sortie de gaz (2) étant réalisé sur l'airbag (1) et des moyens (5, 6 ; 4, 5', 6' ; 10 ; 14) étant prévus pour libérer une section transversale de sortie maximale de l'orifice de sortie de gaz (2) après l'activation de l'airbag, **caractérisé en ce qu'**il est prévu des moyens additionnels (3, 7 ; 4, 7 ; 8, 9 ; 15) permettant de régler activement à une valeur maximale déterminée la section transversale maximale de sortie de l'orifice de sortie de gaz en fonction d'un ou de plusieurs paramètres.

2. Dispositif de protection selon la revendication 1, **caractérisé en ce que** l'orifice de sortie de gaz (2) est totalement fermé et **en ce qu'**après l'activation de l'airbag, il s'ouvre automatiquement avec la section transversale maximale ajustée.

3. Dispositif de protection selon la revendication 2, **caractérisé en ce que** l'orifice de sortie de gaz (2) est totalement fermé au moyen d'une vanne (5) ou similaire qui, après l'activation de l'airbag au moyen d'un mécanisme de positionnement (6), peut être déplacé dans sa position d'ouverture avec section transversale maximale.

4. Dispositif de protection selon la revendication 3, **caractérisé en ce que** la vanne (5) peut être déplacée par le mécanisme de positionnement (6) en direction d'ouverture jusqu'à une butée (3), la butée (3) étant elle-même réglable au moyen d'un deuxième mécanisme de positionnement (7).

5. Dispositif de protection selon la revendication 2, **caractérisé en ce que** la section transversale de l'orifice de sortie de gaz (2) est fermée en partie par un couvercle (4) réglable et en partie par une vanne (5'), mais est dans l'ensemble totalement fermée, la partie de section transversale couverte par la butée (3) étant ajustée au moyen du deuxième mécanisme de positionnement (7') et restant fermée après l'activation de l'airbag, tandis que la partie de section transversale recouverte par la vanne (5') peut être libérée après l'activation de l'airbag en déplaçant la vanne (5') au moyen d'un premier mécanisme de positionnement (6').

6. Dispositif de protection selon la revendication 2, **caractérisé en ce que** l'orifice de sortie de gaz (2) est totalement fermé au moyen d'une feuille qui peut être déchirée par la pression de gaz dans l'airbag, et **en ce que** pour régler la section transversale maximale, il est en outre prévu une vanne (8) ou similaire qui est réglable au moyen d'un mécanisme de positionnement (9).

7. Dispositif de protection selon l'une des revendications 1 à 6, **caractérisé en ce que** la valeur maximale de la section transversale de l'orifice de sortie de gaz (2) est en outre réglable en fonction du poids de l'occupant du véhicule.

8. Dispositif de protection selon la revendication 7, **caractérisé en ce que** la valeur maximale de la section transversale de l'orifice de sortie de gaz (2) est en outre réglable en fonction de la vitesse du véhicule.

9. Dispositif de protection selon la revendication 7 ou 8, **caractérisé en ce que** la valeur maximale de la section transversale de l'orifice de (2) est additionnellement encore réglable en fonction du ralentissement du véhicule dû à l'accident ou en fonction d'autres grandeurs d'état.

10. Dispositif de protection selon l'une des revendications 7 à 9, **caractérisé en ce qu'**il est prévu un mécanisme de positionnement à moteur électrique.

11. Dispositif de protection selon l'une des revendications 1 à 5, **caractérisé en ce que** la vitesse de la libération de section transversale est réglable en fonction d'au moins un des paramètres des revendications 7 à 9.

12. Dispositif de protection selon la revendication 11, **caractérisé en ce qu'**il est prévu un mécanisme de positionnement avec énergie accumulée mécanique, pneumatique ou pyrotechnique.

13. Dispositif de protection selon l'une des revendications 1 à 12, **caractérisé en ce que** la variation de section transversale peut être influencée pendant le processus de libération par le contour de l'orifice de sortie de gaz et/ou par le contour de la vanne ou similaire.

14. Dispositif de protection selon la revendication 13, **caractérisé en ce que** le début du processus de libération est réglable.

15. Dispositif de protection selon la revendication 14, **caractérisé en ce que** les processus déterminant la section transversale maximale de l'orifice de sortie de gaz sont déclenchés dès que l'allumage du véhicule est mis en marche.

16. Dispositif de protection selon l'une des revendications 1 à 15, **caractérisé en ce que** l'orifice de sortie de gaz est divisé en plusieurs orifices de sortie.

17. Dispositif de protection selon la revendication 16, **caractérisé en ce que** les orifices de sortie de gaz sont placés dans un anneau (13) entourant le générateur de gaz (11), et **en ce qu'**il est prévu une vanne (14) annulaire actionnable et un couvercle ou une butée (15) annulaire actionnable.
